(19) **Europäisches Patentamt / European Patent Office / Office européen des brevets**

(11) **EP 4 521 651 A1**

(12) **EUROPEAN PATENT APPLICATION**
published in accordance with Art. 153(4) EPC

(43) Date of publication:
**12.03.2025  Bulletin 2025/11**

(21) Application number: **23815150.0**

(22) Date of filing: **29.05.2023**

(51) International Patent Classification (IPC):
**H04B 7/0413** (2017.01)

(52) Cooperative Patent Classification (CPC):
**H04B 7/0413; H04B 7/0456; H04B 7/06; H04L 5/00**

(86) International application number:
**PCT/CN2023/096855**

(87) International publication number:
**WO 2023/231970 (07.12.2023 Gazette 2023/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.05.2022  CN 202210616331**

(71) Applicant: **Huawei Technologies Co., Ltd.
Shenzhen, Guangdong 518129 (CN)**

(72) Inventors:
• **BI, Xiaoyan
  Shenzhen, Guangdong 518129 (CN)**
• **LIU, Yong
  Shenzhen, Guangdong 518129 (CN)**
• **JIANG, Chenglong
  Shenzhen, Guangdong 518129 (CN)**
• **DONG, Lei
  Shenzhen, Guangdong 518129 (CN)**
• **LIU, Lei
  Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **COMMUNICATION METHOD AND APPARATUS**

(57)    A communication method and apparatus are provided. The method includes: receiving first indication information from a network device, where the first indication information indicates a first dimension; receiving a downlink reference signal from the network device, where the downlink reference signal is determined based on the first dimension and an uplink reference signal; and determining channel information based on the downlink reference signal. **In** the method, the network device and a terminal device each bear a part of a calculation amount and a part of calculation complexity. Therefore, a calculation amount and calculation complexity of channel estimation independently performed by the network device or the terminal device can be reduced, a system latency can be further shortened, and a throughput of a communication system can be improved.

Terminal device — Network device

S301: First indication information, indicating or for configuring a first dimension

S302: Downlink reference signal, where the downlink reference signal is determined based on the first dimension and an uplink reference signal

S303: Determine channel information based on the downlink reference signal

FIG. 3

**Description**

**CROSS-REFERENCE TO RELATED APPLICATIONS**

This application claims priority to Chinese Patent Application No. 202210616331.2, filed with the China National Intellectual Property Administration on May 31, 2022 and entitled "COMMUNICATION METHOD AND APPARATUS", which is incorporated herein by reference in its entirety.

**TECHNICAL FIELD**

This application relates to the field of communication technologies, and in particular, to a communication method and apparatus.

**BACKGROUND**

In a 5G system, in a time division duplexing (time division duplexing, TDD) mode, a user equipment (user equipment, UE) sends a sounding reference signal (sounding reference signal, SRS) to a base station, and the base station performs uplink channel estimation based on the SRS, determines a downlink channel estimation result by using reciprocity between an uplink channel and a downlink channel in the TDD mode, and then calculates a precoding matrix based on the downlink channel estimation result.

Another manner of determining a downlink channel estimation result in TDD is as follows: A base station sends a sounding reference signal (channel state information-reference signal, CSI-RS) to a UE, and the UE performs downlink channel estimation based on the CSI-RS, determines a downlink channel estimation result, then calculates a precoding matrix based on the downlink channel estimation result, and feeds back the precoding matrix to the base station.

Currently, in a process of calculating a precoding matrix, a base station or a UE performs singular value decomposition (singular value decomposition, SVD) on $\widehat{H}_k^{DL}$ whose dimensions are $N_{RX} \times N_{TX}$, where $N_{RX}$ is a quantity of receive antennas of the UE, $N_{TX}$ is a quantity of transmit antennas of the base station, and $\widehat{H}_k^{DL}$ is a downlink channel estimation result of a kth UE. When there are a large quantity of transmit antennas on a base station side, a calculation amount of SVD decomposition is large, calculation complexity is high, and it is difficult for the base station or the UE to complete processing such as multiple-in multiple-out (multiple-in multiple-out, MIMO) precoding within a specific period of time. Consequently, a system latency is excessively long, and a throughput of an entire communication system is affected.

**SUMMARY**

Embodiments of this application provide a communication method and apparatus, to reduce a calculation amount and calculation complexity of a terminal device.

According to a first aspect, this application provides a communication method. The communication method may be applied to a communication system including a first communication apparatus and a second communication apparatus.

The communication method includes the following process: The second communication apparatus receives first indication information from the first communication apparatus, where the first indication information indicates a first dimension; receives a first reference signal from the first communication apparatus, where the first reference signal is determined based on the first dimension and a second reference signal; and determines channel information based on the first reference signal.

In an example, the second communication apparatus is a terminal device. Specifically, the communication method may be applied to a terminal device, or applied to an apparatus including the terminal device, or applied to an apparatus included in the terminal device.

Correspondingly, the first communication apparatus is a network device, the first reference signal is a downlink reference signal, and the second reference signal is an uplink reference signal. In the communication method, the first indication information from the network device is received; the downlink reference signal from the network device is received, where the downlink reference signal is determined based on the first dimension and the uplink reference signal; and the channel information is determined based on the downlink reference signal.

It may be understood that the method is applicable to a scenario in which the network device sends the downlink reference signal to the terminal device and the terminal device calculates a precoding matrix, and is also applicable to a scenario in which the terminal device sends the uplink reference signal to the network device and the network device calculates a precoding matrix.

The first dimension is for determining the first reference signal (for example, the downlink reference signal). The first communication apparatus (for example, the network device) notifies the second communication apparatus (for example, the terminal device) of the first dimension. The second communication apparatus may process the first reference signal determined based on the first dimension. When determining the first reference signal based on the first dimension, the first communication apparatus bears a part of a calculation amount and a part of calculation complexity. Therefore, in the method, a calculation amount and calculation complexity of the second communication apparatus can be reduced, and a system latency can be further shortened, and a throughput of the communication system can be improved.

Optionally, the second reference signal may be predefined in the second communication apparatus, or configured in the second communication apparatus by using signaling. When the second reference signal is configured in the second communication apparatus by using signaling, the first communication apparatus may send, to the second communication apparatus by using higher layer signaling (for example, radio resource control (radio resource control, RRC) signaling), the second reference signal or indication information indicating the second reference signal. Alternatively, the first communication apparatus may send, to the second communication apparatus by using physical layer signaling (for example, downlink control information (downlink control information, DCI)), the second reference signal or indication information indicating the second reference signal.

For example, the first dimension is not greater than (less than or equal to) a quantity of transmit antennas of the network device, and/or the first dimension is not less than (greater than or equal to) a quantity of receive antennas of the terminal device.

Optionally, the first communication apparatus may perform dimension reduction processing on the second reference signal based on the first dimension, to obtain the first reference signal.

In a possible implementation, a port number of the first reference signal and a port number of the second reference signal are the same. In other words, a port number of the downlink reference signal and a port number of the uplink reference signal are the same. For example, both the port number of the first reference signal (for example, the downlink reference signal) and the port number of the second reference signal (for example, the uplink reference signal) are equal to a value of the first dimension.

The port number of the downlink reference signal is a quantity of ports used by the network device to send the downlink reference signal, and the port number of the uplink reference signal is a quantity of ports used by the terminal device to send the uplink reference signal.

In a possible implementation, before the first reference signal (the downlink reference signal) from the first communication apparatus (the network device) is received, the second reference signal (the uplink reference signal) may be further sent to the first communication apparatus based on the first dimension.

For example, a dimension number/the port number corresponding to the second reference signal is the value of the first dimension. For example, the second reference signal $\Omega \in \mathbb{C}^{N_{RX} \times L}$ is a matrix of $N_{Rx} \times L$, where $N_{RX}$ is the quantity of receive antennas of the terminal device, and $L$ is the value of the first dimension.

In this implementation, the second reference signal is sent based on the first dimension, so that the first communication apparatus determines the first reference signal based on the second reference signal, to reduce the calculation amount and the calculation complexity of the second communication apparatus.

In a possible implementation, channel information may be further sent to the first communication apparatus. The first communication apparatus may calculate a precoding matrix based on the channel information, to perform precoding processing on to-be-sent user data.

In a possible implementation, the precoding matrix may be further calculated based on the channel information, to send, to the first communication apparatus, the precoding matrix or corresponding indication information of the precoding matrix.

In a possible implementation, when the channel information is determined based on the first reference signal, the channel information may be determined based on a measurement result of the first reference signal, and a dimension corresponding to the channel information is equal to the quantity of receive antennas of the terminal device. This helps calculate the precoding matrix based on the channel information.

For example, the measurement result of the first reference signal may be decomposed, to determine the channel information based on the quantity of receive antennas of the terminal device and a decomposed measurement result.

In a possible implementation, when the channel information is sent to the first communication apparatus, a parameter set may be sent to the first communication apparatus, where the parameter set indicates a codebook matrix corresponding to the channel information. In this implementation, the channel information may be mapped to a specific codebook matrix, and then indicated by using the parameter set.

The parameter set may include one or more parameters. For example, one of the parameters indicates the codebook matrix corresponding to the channel information. Optionally, the parameter may be an index of the codebook matrix corresponding to the channel information.

Optionally, the codebook matrix is a part of matrices in the precoding matrix.

In a possible implementation, when the channel information is sent to the first communication apparatus, quantized and compressed channel information may be sent to the first communication apparatus.

According to a second aspect, this application provides a communication method. The communication method may be applied to a communication system including a first communication apparatus and a second communication apparatus.

The communication method includes the following process: The first communication apparatus sends first indication information to the second communication apparatus, where the first indication information indicates a first dimension; determines a first reference signal based on the first dimension and a second reference signal; and sends the first reference signal to the second communication apparatus.

In an example, the first communication apparatus is a network device. Specifically, the communication method may be applied to a network device, or applied to an apparatus including the network device, or applied to an apparatus included in the network device.

Correspondingly, the second communication apparatus is a terminal device, the first reference signal is a downlink reference signal, and the second reference signal is an uplink reference signal. In the communication method, the first indication information is sent to the terminal device; the downlink reference signal is determined based on the first dimension and the uplink reference signal; and the downlink reference signal is sent to the terminal device.

It may be understood that the method is applicable to a scenario in which the network device sends the downlink reference signal to the terminal device and the terminal device calculates a precoding matrix, and is also applicable to a scenario in which the terminal device sends the uplink reference signal to the network device and the network device calculates a precoding matrix.

In the method, when determining the first reference signal based on the first dimension, the first communication apparatus bears a part of a calculation amount and a part of calculation complexity. Therefore, a calculation amount and calculation complexity of the second communication apparatus can be reduced, a system latency can be further shortened, and a throughput of the communication system can be improved.

In a possible implementation, a port number of the downlink reference signal and a port number of the uplink reference signal are the same. For example, both the port number of the downlink reference signal and the port number of the uplink reference signal are equal to a value of the first dimension.

In a possible implementation, one or more second reference signals may be further sent to the second communication apparatus (the terminal device or the network device), to notify the second communication apparatus of one or more available second reference signals.

In a possible implementation, before the first reference signal is determined based on the first dimension and the second reference signal, the second reference signal from the second communication apparatus may be further received. In this implementation, the second communication apparatus negotiates the second reference signal with the first communication apparatus, so that the first communication apparatus determines the first reference signal based on the second reference signal, to reduce the calculation amount and the calculation complexity of the second communication apparatus.

In a possible implementation, channel information from the second communication apparatus may be further received, and the channel information is determined based on the downlink reference signal.

In a possible implementation, a precoding matrix may be further determined based on the channel information.

The precoding matrix may be for performing precoding processing on to-be-sent user data.

In a possible implementation, the precoding matrix or corresponding indication information of the precoding matrix may be further received from the second communication apparatus.

In a possible implementation, when the first reference signal is determined based on the first dimension and the second reference signal, the first reference signal is determined based on the first dimension and a measurement result of the second reference signal, where a dimension corresponding to the first reference signal is less than a quantity of transmit antennas of the network device, and/or greater than a quantity of receive antennas of the terminal device. In this implementation, the first reference signal is determined based on the first dimension and the measurement result of the second reference signal, so that the calculation amount and the calculation complexity of the second communication apparatus can be reduced.

For example, the measurement result of the second reference signal may be decomposed, to determine the first reference signal based on the first dimension and a decomposed measurement result.

In a possible implementation, when the second reference signal from the second communication apparatus is received, a parameter set from the second communication apparatus may be received, where the parameter set indicates a codebook matrix corresponding to the channel information.

In a possible implementation, when the uplink reference signal from the second communication apparatus is received, quantized and compressed channel information from the second communication apparatus may be received.

According to a third aspect, a communication apparatus is provided. The communication apparatus may be a terminal device or a network device, or a chip disposed in the terminal device or the network device. The communication apparatus may implement the method in any one of the foregoing aspects.

The communication apparatus includes corresponding modules, units, or means (means) for implementing the foregoing methods. The modules, units, or means may be implemented by hardware, software, or hardware executing corresponding software. The hardware or the software includes one or more modules or units corresponding to the foregoing functions.

According to a fourth aspect, a communication apparatus is provided, and includes a transceiver unit. Optionally, the communication apparatus may further include a processing unit. The communication apparatus may implement the method in any one of the aspects or any implementation of any one of the aspects.

According to a fifth aspect, a communication apparatus is provided, and includes a processor. The processor may be configured to perform the method in any one of the foregoing aspects or any implementation of any one of the foregoing aspects. Optionally, the apparatus further includes a memory. The processor is coupled to the memory. The memory is configured to store a computer program or instructions. The processor may execute the program or the instructions in the memory, so that the apparatus can perform the method in any one of the foregoing aspects or any implementation of any one of the foregoing aspects.

According to a sixth aspect, a communication apparatus is provided. The apparatus includes an interface circuit and a logic circuit, and the logic circuit is coupled to the interface circuit. The interface circuit may be a code/data read/write interface circuit. The interface circuit is configured to receive computer-executable instructions (the computer-executable instructions are stored in a memory, and may be directly read from the memory, or may pass through another component) and transmit the computer-executable instructions to the logic circuit, so that the logic circuit runs the computer-executable instructions to perform the method in any one of the foregoing aspects or any implementation of any one of the foregoing aspects.

In some possible designs, the communication apparatus may be a chip or a chip system.

According to a seventh aspect, a communication apparatus is provided, and includes a processor, where the processor is coupled to a memory. The processor is configured to read instructions stored in the memory, and can receive a signal through a receiver, and transmit a signal through a transmitter, to perform the method in any one of the foregoing aspects or any implementation of any one of the foregoing aspects.

Optionally, there may be one or more processors, and one or more memories. Optionally, the memory and the processor may be integrated together, or the memory and the processor are separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

The communication apparatus may be a chip, and the processor may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated in the processor, or may be located outside the processor and exist independently.

According to an eighth aspect, a processor is provided. The processor includes an input circuit, an output circuit, and a processing circuit. The processing circuit is configured to receive a signal through the input circuit, and transmit a signal through the output circuit, so that the processor performs the method in any one of the foregoing aspects or any implementation of any one of the foregoing aspects.

In a specific implementation process, the processor may be a chip, the input circuit may be an input pin, the output circuit may be an output pin, and the processing circuit may be a transistor, a gate circuit, a trigger, various logic circuits, or the like. The input signal received through the input circuit may be received and input by, for example, but not limited to, a receiver. The signal output through the output circuit may be output to, for example, but not limited to, a transmitter and transmitted by the transmitter. The input circuit and the output circuit may be a same circuit, and the circuit serves as an input circuit and an output circuit at different moments. Specific implementations of the processor and various circuits are not limited in this application.

According to a ninth aspect, a communication apparatus is provided. The communication apparatus includes a logic circuit and an input/output interface. The input/output interface is configured to communicate with a module other than the communication apparatus. The logic circuit is configured to run a computer program or instructions to perform the method in any design of any one of the foregoing aspects. The communication apparatus may be the terminal device or the network device in any one of the foregoing aspects, or an apparatus including the terminal device or network device, or an apparatus included in the terminal device or network device, for example, a chip.

Alternatively, the input/output interface may be a code/data read/write interface circuit, or a communication interface. The input/output interface is configured to receive a computer program or instructions (the computer program or instructions is/are stored in a memory, and may be directly read from the memory, or may pass through another component), and transmit the computer program or instructions to the input/output interface, so that the input/output interface runs the computer program or instructions to perform the method in any one of the foregoing aspects.

Optionally, the communication apparatus may be a chip.

According to a tenth aspect, a computer program product is provided. The computer program product includes a computer program (which may also be referred to as code or instructions), and when the computer program is run, so that a computer performs the method in any one of the foregoing aspects or any implementation of any one of the foregoing aspects.

According to an eleventh aspect, a computer-readable medium is provided. The computer-readable medium stores a computer program (which may also be referred to as code or instructions). When the computer program is run on a computer, so that the computer performs the method in any one of the foregoing aspects or any implementation of any one of the foregoing aspects.

According to a twelfth aspect, a chip system is provided. The chip system includes a processor and an interface, and is configured to support a communication apparatus to implement functions in any one of the foregoing aspects or any implementation of any one of the foregoing aspects. In a possible design, the chip system further includes a memory, configured to store necessary information and data of the foregoing communication apparatus. The chip system may include a chip, or may include a chip and another discrete component.

According to a thirteenth aspect, a chip apparatus is provided. The chip apparatus includes an input interface and/or an output interface. The input interface may implement a receiving function in any aspect or any implementation of any aspect, and the output interface may implement a sending function in any one of the foregoing aspects or any implementation of any one of the foregoing aspects.

According to a fourteenth aspect, a functional entity is provided. The functional entity is configured to implement the method in any one of the foregoing aspects or any implementation of any one of the foregoing aspects

According to a fifteenth aspect, a communication system is provided, and includes a terminal device (or a network device) configured to perform the method in the first aspect and a network device (or a terminal device) configured to perform the method in the second aspect.

For technical effects brought by any implementation of the third aspect to the fifteenth aspect, refer to technical effects brought by the first aspect and the second aspect. Details are not described herein again.

## BRIEF DESCRIPTION OF DRAWINGS

FIG. 1 is a diagram of an architecture of a 5G communication system;
FIG. 2 is a diagram of an application scenario according to an embodiment of this application;
FIG. 3 is a diagram of a communication process according to an embodiment of this application;
FIG. 4 is a diagram of a communication process according to an embodiment of this application;
FIG. 5 is a diagram of a structure of a communication apparatus according to an embodiment of this application;
FIG. 6 is a diagram of a structure of a communication apparatus according to an embodiment of this application; and
FIG. 7 is a diagram of a structure of a communication apparatus according to an embodiment of this application.

## DESCRIPTION OF EMBODIMENTS

The following further describes in detail this application with reference to accompanying drawings.

In a complex evolution process of a mobile communication system, for example, in a 5th generation (5th generation, 5G) communication system (for example, a new radio (new radio, NR) system) and a 6G solution, a massive (Massive) MIMO technology can improve a system capacity, and meets a requirement for high-speed transmission. In the Massive MIMO technology, an array gain, multiplexing and diversity gains, and a co-channel interference reduction gain in space can be obtained for a signal by using resources in a space dimension without increasing system bandwidth, so that a capacity and spectral efficiency of a communication system are exponentially improved.

In a mobile communication system, an uplink channel or a downlink channel is estimated, so that data can be sent and received, and system synchronization and feedback channel information can be obtained. Channel estimation refers to a process of reconstructing or restoring a received signal to compensate for signal distortion caused by fading caused by channel fading and noise, where changes in time domain and frequency domain of a channel are tracked by using a standard signal predicted by a transmitter and a receiver. The standard signal may also be referred to as a pilot signal or a reference signal (reference signal, RS). Standard signals are distributed on different resource elements (resource element, RE) in time-frequency two-dimensional space in an orthogonal frequency division multiplexing (orthogonal frequency division multiplexing, OFDM) symbol, and have a known amplitude and phase.

In a MIMO system, each transmit antenna (which may be a virtual antenna or a physical antenna) has an independent channel. For example, in an uplink and a downlink, to implement channel quality measurement of a multi-antenna system, a plurality of pilot symbols are separately defined in the NR system: a CSI-RS, a demodulation reference signal (demodulation reference signal, DMRS), and a sounding reference signal (sounding reference signal, SRS). The DMRS is for assisting in demodulation of a physical downlink shared channel (physical downlink shared channel, PDSCH). The CSI-RS is for measuring a downlink channel corresponding to a physical antenna port. The receiver performs channel estimation on each antenna port sent by a base station, and performs CSI feedback by using an estimation result. The CSI includes related information such as a channel quality indicator (channel quality indicator, CQI), a precoding indicator (precoding matrix indicator, PMI), a layer indicator (layer indicator, LI), and a rank indicator (rank indicator, RI). However, in a measurement process of an uplink channel, the base station estimates the uplink channel by using a received SRS, and may perform frequency selection resource scheduling, power control, timing estimation and modulation/coding scheme order selection, downlink precoding generation in TDD, and the like based on the uplink channel.

The technical solutions in embodiments of this application may be applied to a mobile communication system (or referred to as a wireless communication system). For example, the mobile communication system may be a 4th generation (4th Generation, 4G) communication system (for example, a long term evolution (long term evolution, LTE) system), a 5G communication system (for example, an NR system), a future mobile communication system such as 6G, or the like.

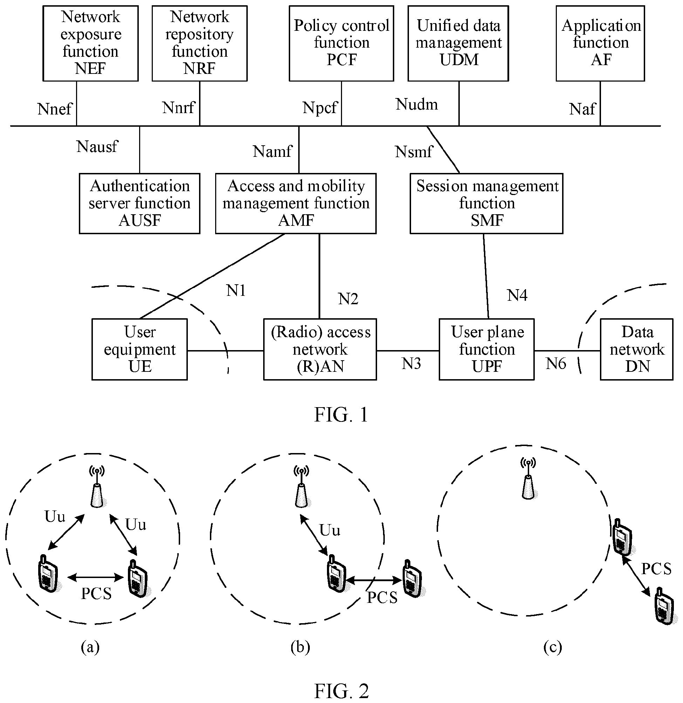

A 3rd generation partnership project (3rd generation partnership project, 3GPP) standard group formulates a next generation mobile communication network architecture (next generation system), which is referred to as a 5G network architecture. FIG. 1 is a diagram of the 5G network architecture, including a terminal device part, a network device part, and a data network (data network, DN) part.

The terminal device part generally includes a user equipment (user equipment, UE), and the like. In a wireless network, the UE is a device having a wireless transceiver function, and may communicate with one or more core network (core network, CN) network elements through an access network element in a (radio) access network ((radio) access network, (R)AN).

For example, the user equipment may also be referred to as an access terminal, a terminal, a subscriber unit, a subscriber station, a mobile station, a remote station, a remote terminal, a mobile device, a user terminal, a user agent, a user apparatus, or the like. The user equipment may be deployed on land, and include an indoor user equipment, an outdoor user equipment, a handheld user equipment, or a vehicle-mounted user equipment; or may be deployed on a water surface (for example, on a ship); or may be deployed in the air (for example, on an aircraft, a balloon, or a satellite). The user equipment may be a cellular phone (cellular phone), a cordless phone, a session initiation protocol (session initiation protocol, SIP) phone, a smartphone (smartphone), a mobile phone (mobile phone), a wireless local loop (wireless local loop, WLL) station, a personal digital assistant (personal digital assistant, PDA), or the like. Alternatively, the user equipment may be a handheld device or a computing device having a wireless communication function, another device connected to a wireless modem, a vehicle-mounted device, a wearable device, an uncrewed aerial vehicle device, a terminal (also referred to as an internet of things device) in the internet of things, a terminal in the internet of vehicles, a terminal in any form in a 5G network and a future network, a relay user equipment, a mobile terminal (mobile terminal, MT), a terminal in a future evolved public land mobile network (public land mobile network, PLMN), or the like. The relay user equipment may be, for example, a 5G residential gateway (residential gateway, RG). For example, the user equipment may be a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. A type, a category, or the like of a terminal device is not limited in embodiments of this application.

A network device in embodiments of this application is a device having a wireless transceiver function, and is configured to communicate with the terminal device. The network device may be a node in a (R)AN, and may also be referred to as a base station, or may also be referred to as a (R)AN node. The network device may be an evolved NodeB (evolved NodeB, eNB, or eNodeB) in LTE, or may be a base station in a 5G network like a gNodeB (gNB), a base station in a 6G network, a base station in a future evolved public land mobile network (public land mobile network, PLMN), a broadband network gateway (broadband network gateway, BNG), an aggregation switch, a non-3rd generation partnership project (3rd generation partnership project, 3GPP) access device, or the like. Optionally, the network device in embodiments of this application may include base stations in various forms, for example, a macro base station, a micro base station (also referred to as a small cell), a relay station, an access node in a Wi-Fi system, a transmission reception point (transmission reception point, TRP), a transmission point (transmission point, TP), a mobile switching center, a device in device-to-device (device-to-device, D2D), vehicle-to-everything (vehicle-to-everything, V2X), and machine-to-machine (machine-to-machine, M2M) communication that implements a function of a base station, and the like. The network device may further include a central unit (central unit, CU) and a distributed unit (distributed unit, DU) in a cloud access network (cloud radio access network, C-RAN) system, and a network device in an NTN communication system. This is not specifically limited in embodiments of this application.

The network device part includes a network exposure function (network exposure function, NEF), a network repository function (network repository function, NRF), a policy control function (policy control function, PCF), unified data management (unified data management, UDM), an authentication server function (authentication server function, AUSF), an access and mobility management function (access and mobility management function, AMF), a session management function (session management function, SMF), a user plane function (user plane function, UPF), an access network (access network, AN), and the like. In the foregoing network device, a part other than an access network part may be referred to as a core network part.

The core network part includes a user plane function and a control plane function. The user plane function is mainly responsible for data packet forwarding, quality of service (quality of service, QoS) control, charging information statistics collection, and the like. The control plane function is mainly responsible for service process interaction, and delivering a data packet forwarding policy, a QoS control policy, and the like to the user plane function.

A data network DN may also be referred to as a packet data network (packet data network, PDN), and may be usually deployed outside a carrier network, for example, a third-party network. For example, the carrier network may access a plurality of DNs, and a plurality of services may be deployed on the DNs, to provide services such as data and/or voice for the UE. The third party may be a service party other than the carrier network and the UE, and may provide services such as data and/or voice for the UE. A specific representation form of the third party may be specifically determined based on an actual application scenario, and is not limited herein.

An application function (application function, AF) may belong to the carrier network, or may not belong to the carrier network. Generally, the AF belongs to the third party rather than the carrier network, but has a protocol relationship with the carrier network. The AF is a function network element configured to provide various business services, and may support a function of influencing data routing by using an application, access a network exposure function NEF, and interact with a policy framework to perform policy control, and the like.

For example, the following briefly describes a network function in the carrier network.

The NEF is a control plane function provided by a carrier, provides a framework, authentication, and an interface related to network capability exposure, and transfers information between a network function and another network function in a 5G system. The NEF exposes an external bidirectional interface of a network capability to the third party in a secure manner. When the another network function (such as the AF) needs to communicate with the third-party network, the NEF may serve as a relay for communication with a third-party network entity. The NEF may further serve as a translator for identification information of a subscriber and a translator for identification information of a third-party network function. For example, when sending a subscription permanent identifier (subscription permanent identifier, SUPI) of a subscriber from the PLMN to the third party, the NEF may translate the SUPI as a corresponding generic public subscription identifier (generic public subscription identifier, GPSI). Conversely, the NEF forwards external information to a PLMN network, to prevent another network function in the PLMN from directly contacting the outside.

The NRF is a control plane function provided by the carrier, and may be configured to maintain real-time information of all network function services in a network.

The PCF is a control plane function provided by the carrier, and is configured to generate and manage user, session, and QoS flow processing policies. The PCF supports a unified policy framework to govern network behavior, and provides policy rules, subscription information relevant for policy decisions, and the like to another control function.

The UDM is a control plane function provided by the carrier, and is responsible for storing information such as a security context (security context), and subscription data of a subscriber in the PLMN. The subscriber in the carrier network may be specifically a user using a service provided by the carrier network, for example, a user using a terminal device SIM card of China Telecom, or a user using a terminal device SIM card of China Mobile. For example, the security context may be a cookie (cookie), a token (token), or the like stored in a local terminal device (for example, a mobile phone). The subscription data of the subscriber may be a supporting service of the terminal device SIM card, for example, a traffic package of a mobile phone SIM card.

The AUSF is a control plane function provided by the carrier, and is usually used for first-level authentication, to be specific, network authentication between the UE (the subscriber) and the carrier network.

The AMF is a control plane network function provided by the carrier network, and is responsible for access control and mobility management for accessing the carrier network by the UE, for example, including functions such as registration management, connection management, reachability management, mobility management, allocation of a temporary user identity, and user authentication and authorization.

The SMF is a control plane network function provided by the carrier network, and is responsible for managing a protocol data unit (protocol data unit, PDU) session of the UE. The PDU session is a channel for transmitting a PDU, and the terminal device needs to communicate data with the DN by using the PDU session. The SMF may be responsible for establishment, maintenance, deletion, and the like of the PDU session. The SMF includes session-related functions such as session management (for example, session establishment, modification, and release, including tunnel maintenance between the UPF and the AN, and the like), selection and control of the UPF, service and session continuity (service and session continuity, SSC) mode selection, and roaming.

The UPF is a gateway provided by the carrier and a gateway for communication between the carrier network and the DN. The UPF includes user plane-related functions such as data packet routing and transmission, packet detection, service usage reporting, QoS processing, lawful interception, uplink packet detection, and downlink data packet storage.

In FIG. 1, Nnef, Nausf, Nnrf, Npcf, Nudm, Naf, Namf, Nsmf, N1, N2, N3, N4, and N6 are interface sequence numbers. For example, for meanings of the interface sequence numbers, refer to meanings defined in the 3GPP standard protocol. The meanings of the interface sequence numbers are not limited in this application. It should be noted that names of network functions and names of interfaces between the network functions in FIG. 1 are merely examples. In specific implementation, a name of an interface of the system architecture may alternatively be another name. This is not limited in this application.

Embodiments of this application may be alternatively applied to an architecture of a communication system shown in FIG. 2. The communication system is applicable to a communication scenario with network coverage and a communication scenario without network coverage. The communication system includes one or more base stations and one or more UEs. Transmission is performed between a UE and a base station by using an evolved universal terrestrial radio access network (evolved universal terrestrial radio access network, UTRAN)-to-UE (UTRAN-to-UE, Uu) air interface, and communication is performed between a UE and a UE by using a personal communication service (personal communication service, PCS). A UE may be within coverage of a base station, or may be outside coverage of a base station. For example, in (a) in FIG. 2, a UE 1 and a UE 2 are located within coverage of a base station. In (b) in FIG. 2, a UE 1 is located within coverage of a base station, and a UE 2 is located outside the coverage of the base station. In (c) in FIG. 2, a UE 1 and a UE 2 are located outside coverage of a base station.

Embodiments of this application provide a communication method, to reduce a calculation amount and calculation complexity of a terminal device. In the method, a network device sends first indication information to a terminal device, where the first indication information indicates a first dimension. The network device determines a downlink reference signal based on the first dimension and an uplink reference signal. The terminal device determines channel information based on the downlink reference signal corresponding to the first dimension. When determining the downlink reference signal or the channel information based on the first dimension, the network device and the terminal device each bear a part of a calculation amount and a part of calculation complexity, a calculation amount and calculation complexity of channel estimation independently performed by the network device or the terminal device can be reduced, a system latency can be further shortened, and a throughput of a communication system can be improved. It may be understood that channel estimation in this application is channel measurement.

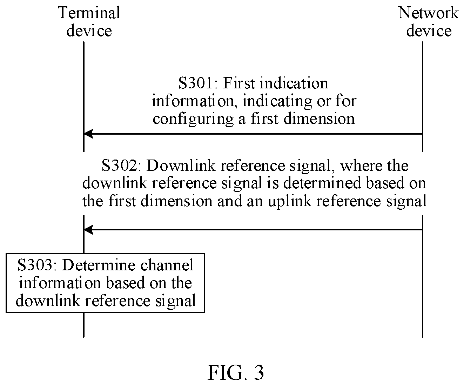

FIG. 3 is a diagram of a communication process, including the following steps.

S301: A network device sends first indication information to a terminal device. Correspondingly, the terminal device receives the first indication information.

The first indication information indicates or is for configuring a first dimension. The first dimension is for determining a downlink reference signal. The first dimension is notified to the terminal device. This helps the terminal device subsequently process the downlink reference signal based on the first dimension.

S302: The network device sends a downlink reference signal to the terminal device. Correspondingly, the terminal device receives the downlink reference signal.

The downlink reference signal is determined based on the first dimension and an uplink reference signal. For example, the network device determines the downlink reference signal based on the first dimension and the uplink reference signal.

S303: The terminal device determines channel information based on the downlink reference signal.

The first dimension is a positive integer. In a possible implementation, the first dimension is less than or equal to a quantity of transmit antennas of the network device, and/or the first dimension is greater than or equal to a quantity of receive antennas of the terminal device. The quantity of transmit antennas of the network device is a quantity of all transmit antennas of the network device, and the quantity of receive antennas of the terminal device is a quantity of all receive antennas of the terminal device. For example, the first dimension is represented by $L$, the quantity of transmit antennas of the network device is represented by $N_{TX}$, and the quantity of receive antennas of the terminal device is represented by $N_{RX}$. The first dimension is one dimension in a plurality of dimensions of the downlink reference signal. For example, if the downlink reference signal is represented in a form of a matrix, the plurality of dimensions correspond to a quantity of rows and a quantity of columns of the matrix, and the first dimension may be the quantity of rows and/or the quantity of columns of the matrix. Generally, a column of the matrix corresponds to one moment, and a row of the matrix corresponds to a port.

The first dimension may alternatively be considered as a port number of the downlink reference signal. One antenna port corresponds to one virtual transmit antenna, and one virtual transmit antenna corresponds to one or more physical transmit antennas. The port number of the downlink reference signal is a quantity of ports used by the network device to send the downlink reference signal.

In a possible implementation, the network device may further send second indication information to the terminal device, where the second indication information indicates or is for configuring (one or more) uplink reference signals. Optionally, the first dimension is also one dimension in a plurality of dimensions of the uplink reference signal. For example, if the uplink reference signal is represented in a form of a matrix, the plurality of dimensions correspond to a quantity of rows and a quantity of columns of the matrix, and the first dimension may be the quantity of rows and/or the quantity of columns of the matrix. For example, an uplink reference signal satisfies $\Omega \in \mathbb{C}^{N_{RX} \times L}$, to be specific, the uplink reference signal $\Omega$ is a matrix of $N_{RX} \times L$, the matrix has $N_{RX}$ rows and $L$ columns, and a first dimension of the uplink reference signal is a quantity of columns $L$. Optionally, $\Omega$ may be a Gaussian random matrix obtained after normalization processing.

The first dimension may alternatively be considered as a port number of the uplink reference signal. One antenna port corresponds to one virtual transmit antenna, and one virtual transmit antenna corresponds to one or more physical transmit antennas. The port number of the uplink reference signal is a quantity of ports used by the terminal device to send the uplink reference signal.

A specific value of $\Omega$ is not limited in this embodiment of this application. For example, the network device and the terminal device may agree on one or more types of matrices, and the second indication information may be an index of the matrix.

Optionally, the first indication information and/or the second indication information may be carried in downlink control information (downlink control information, DCI) and sent to the terminal device.

Optionally, the first indication information and/or the second indication information may be carried in radio resource control (radio resource control, RRC) signaling and sent to the terminal device.

Optionally, the first indication information and/or the second indication information may be carried in media access control (media access control, MAC)-control element (control element, CE) signaling and sent to the terminal device.

Optionally, the first dimension and/or the uplink reference signal may be preconfigured/predefined in the terminal device and/or the network device. In this case, processes in which the network device sends the first indication information and the second indication information to the terminal device may be omitted.

In a possible implementation, before S302, the terminal device may further send an uplink reference signal to the network device based on the first dimension, to negotiate with the network device about an uplink reference signal to be used to generate the downlink reference signal. If the network device indicates one or more uplink reference signals to the terminal device by using the second indication information, the uplink reference signal sent by the terminal device to the network device is one of the one or more uplink reference signals, and a dimension of the uplink reference signal is also the first dimension.

When determining the downlink reference signal based on the first dimension and the uplink reference signal, the network device may determine the downlink reference signal based on the first dimension and a measurement result of the uplink reference signal, where a dimension corresponding to the downlink reference signal is less than or equal to the quantity of transmit antennas of the network device, and/or the dimension corresponding to the downlink reference signal is greater than or equal to the quantity of receive antennas of the terminal device.

For example, the network device may decompose the measurement result of the uplink reference signal, to determine the downlink reference signal based on the first dimension and a decomposed measurement result. The decomposition includes but is not limited to SVD decomposition, orthogonal triangular (orthogonal right triangular decomposition, QR) decomposition, and the like.

Optionally, the measurement result of the uplink reference signal may be related to the uplink reference signal and an uplink channel, where the uplink channel is an uplink channel used when the terminal device sends the uplink reference signal. For example, a measurement result of an uplink reference signal satisfies $Y_1 = H_k^{UL} \cdot \Omega \in \mathbb{C}^{N_{TX} \times L}$, where $Y_1$ is an uplink measurement result that is of the kth user and that is obtained by the network device, $H_k^{UL}$ is an uplink channel, $H_k^{UL} \in \mathbb{C}^{N_{TX} \times N_{RX}}$, dimensions of $H_k^{UL}$ are $N_{TX} \times N_{RX}$, $\Omega \in \mathbb{C}^{N_{RX} \times L}$, and dimensions of $\Omega$ are $N_{RX} \times L$.

For example, the network device performs QR decomposition on the measurement result $Y_1$ of the uplink reference signal, to obtain a decomposed measurement result $Y_1 = Q \cdot R$, where $Q \in \mathbb{C}^{N_{TX} \times N_{TX}}$ is an orthogonal matrix, dimensions of $Q$ are $N_{TX} \times N_{TX}$, $R \in \mathbb{C}^{N_{TX} \times L}$ is an upper triangular matrix, and dimensions of $R$ are $N_{TX} \times L$.

When the network device determines the downlink reference signal based on the first dimension and the decomposed measurement result, the network device may intercept columns corresponding to the first dimension from the decomposed measurement result, to obtain the downlink reference signal. For example, the network device truncates the orthogonal matrix $Q$, and selects the first $L$ columns (or the middle $L$ columns, or the last $L$ columns, or any $L$ columns) of the first dimension of the orthogonal matrix $Q$, to obtain a downlink reference signal $\bar{Q} = Q(:, 1:L) \in \mathbb{C}^{N_{TX} \times L}$, where $\bar{Q}$ is a matrix of $N_{TX} \times L$, and dimensions of $\bar{Q}$ are $N_{TX} \times L$, or obtain a conjugate $\bar{Q}^*$ of the downlink reference signal $\bar{Q}$. The downlink reference signal $\bar{Q}$ or $\bar{Q}^*$ is a matrix of $N_{TX} \times L$, the matrix has $N_{TX}$ rows and $L$ columns, and a first dimension of the downlink reference signal is a quantity of columns of the matrix. Herein, the network device performs dimension reduction processing on the downlink reference signal, and bears a part of a calculation amount and a part of calculation complexity.

In a possible implementation, the port number of the downlink reference signal and the port number of the uplink reference signal are the same, for example, both are a value of the first dimension. For example, a port number of $\Omega$ is $L$, and a port number of $\overline{Q}$ is $L$.

In S303, in a possible implementation, the terminal device may determine the channel information based on a measurement result of the downlink reference signal. A dimension corresponding to the channel information is equal to the quantity of receive antennas of the terminal device.

For example, the terminal device may decompose the measurement result of the downlink reference signal (or a transposed matrix of the measurement result of the downlink reference signal), to determine the channel information based on a decomposed measurement result. The decomposition includes but is not limited to SVD decomposition, QR decomposition, and the like.

Optionally, the measurement result of the downlink reference signal may be related to the downlink reference signal and a downlink channel, where there is reciprocity between the downlink channel used when the network device sends the downlink reference signal and the uplink channel used when the terminal device sends the uplink reference signal. For example, a measurement result of a downlink reference signal satisfies $Y_2 = H_k^{DL} \cdot \overline{Q}^* \in \mathbb{C}^{N_{RX} \times L}$, where $Y_2$ is a downlink measurement result of the kth user, dimensions of $Y_2$ are $N_{RX} \times L$, $H_k^{DL}$ is a downlink channel, $H_k^{DL} \in \mathbb{C}^{N_{RX} \times N_{TX}}$, dimensions of $H_k^{DL}$ are $N_{RX} \times N_{TX}$, $\overline{Q}^* \in \mathbb{C}^{N_{TX} \times L}$ is a conjugate matrix of $\overline{Q}$, and dimensions of $\overline{Q}^*$ are $N_{TX} \times L$.

For example, the terminal device performs SVD decomposition on a transposed matrix $Y_2^T \in \mathbb{C}^{L \times N_{RX}}$ of the measurement result $Y_2$ of the downlink reference signal, to obtain a decomposed measurement result $Y_2^T = U \cdot \Sigma \cdot V^H$, where dimensions of $Y_2^T$ are $L \times N_{RX}$, $U \in \mathbb{C}^{L \times L}$, dimensions of $U$ are $L \times L$, $\Sigma \in \mathbb{C}^{L \times N_{RX}}$, dimensions of $\Sigma$ are $L \times N_{RX}$, $V \in \mathbb{C}^{N_{RX} \times N_{RX}}$, and dimensions of $V$ are $N_{RX} \times N_{RX}$.

When the terminal device determines the channel information based on the decomposed measurement result, the terminal device may intercept columns corresponding to the quantity of receive antennas from the decomposed measurement result, to obtain the channel information. For example, the terminal device truncates a matrix $U$, and selects the first $N_{RX}$, to be specific, the quantity of receive antennas, columns (or the middle $N_{RX}$ columns, or the last $N_{RX}$ columns, or any $N_{RX}$ columns) of the matrix $U$, to obtain channel information $\overline{U} = U(:, 1:N_{RX}) \in \mathbb{C}^{L \times N_{RX}}$, where $\overline{U}$ is a matrix of $L \times N_{RX}$. Herein, the terminal device processes the measurement result obtained after the dimension reduction processing, and a calculation amount and calculation complexity are low.

In a possible implementation, the terminal device may further send the channel information to the network device.

For example, the channel information may be mapped to a specific codebook. When sending the channel information, the terminal device may send a parameter set to the network device, where the parameter set indicates a codebook matrix corresponding to the channel information. Optionally, the codebook matrix is a part of matrices in a precoding matrix.

For another example, the channel information may be quantized and compressed. When sending the channel information, the terminal device may send quantized and compressed channel information to the network device.

In a possible implementation, the network device determines a matrix $V_k$ based on the channel information, then calculates a precoding matrix by using the matrix $V_k$, and performs precoding processing on user data by using the precoding matrix. For example, when determining the matrix $V_k$ based on the channel information, the network device may project a feedback result of the kth user to high-dimensional space by using the channel information, to determine the matrix $V_k = (\overline{Q} \cdot \overline{U})^* \in \mathbb{C}^{N_{TX} \times N_{RX}}$, where dimensions of $V_k$ are $\mathbb{C}^{N_{TX} \times N_{RX}}$, and a symbol * represents a conjugate operation. When calculating the precoding matrix by using the matrix $V_k$, the network device may first extract the first $Nlayer_k$ columns of $V_k$ as a matrix $P_k = V_k[:, 1:NLayer_k] \in \mathbb{C}^{N_{TX} \times NLayer_k}$ (where for example, the first $Nlayer_k$ columns correspond to the first $Nlayer_k$ eigenvalues in eigenvalues, in $V_k$, whose energy is arranged in descending order), dimensions of $P_k$ are $N_{TX} \times NLayer_k$, and $P_k$ of a plurality of users is combined into $P_{opt} = [P_1, \ldots, P_k, \ldots, P_{Nue}] \in \mathbb{C}^{N_{TX} \times NLayer}$, where $P_{opt}$ is a combined matrix, dimensions of $P_{ope}$ are $N_{TX} \times NLayer_k$, $Nue$ represents a total quantity of users, $NLayer$ represents a quantity of columns of $P_{opt}$. Then, the network device calculates a precoding matrix $\widetilde{W}_{opt}^{zf} = P_{opt} \cdot \left( P_{opt}^H \cdot P_{opt} \right)^{-1} \in \mathbb{C}^{N_{TX} \times NLayer}$ according to a zero forcing (zero forcing, zf) algorithm, where $\widetilde{W}_{opt}^{zf}$ is a matrix obtained after processing is performed on $P_{opt}$ by using the zf algorithm, dimensions of $\widetilde{W}_{opt}^{zf}$ are $N_{TX} \times NLayer_k$ , and $P_{opt}^H$ is a transposed matrix of $P_{opt}$ . Normalization processing is performed on the precoding matrix $\widetilde{W}_{opt}^{zf}$ , to obtain a final precoding matrix

$$W_{opt}^{zf} = \frac{\widetilde{W}_{opt}^{zf}}{\sqrt{\sum_{i=1}^{Ntrunc}\left|\widetilde{W}_{opt}^{zf}[i,:]\right|^2}} \in \mathbb{C}^{NTX \times NLayer}$$

,where dimensions of $W_{opt}^{zf}$ are $N_{TX} \times NLayer_k$, $\widetilde{W}_{opt}^{zf}[i,:]$ indicates that i rows are selected from $\widetilde{W}_{opt}^{zf}$ , i=1, ..., *Ntrunc, Ntrunc* indicates that the first *Ntrunc* rows are selected from $\widetilde{W}_{opt}^{zf}$ , and i is a positive integer.

In a possible implementation, the terminal device may determine the precoding matrix based on the channel information, and then send the precoding matrix to the network device. For example, the terminal device determines the matrix $V_k$ based on the channel information, and sends the matrix $V_k$ to the network device.

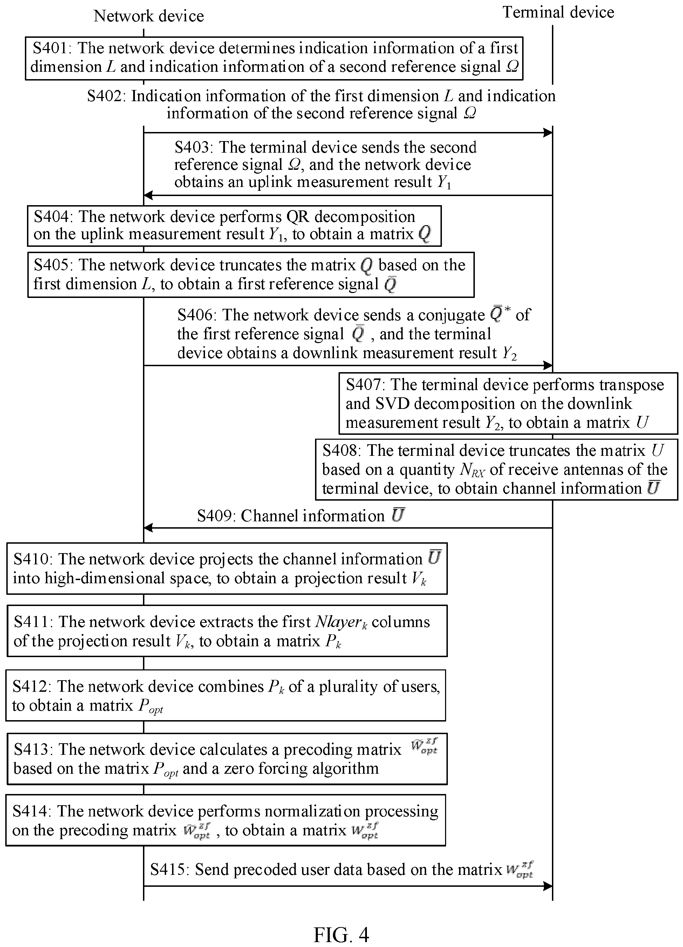

The following describes, by using a specific embodiment, the communication method provided in embodiments of this application. Refer to FIG. 4. The method includes the following steps.

S401: A network device determines indication information of a first dimension *L* and indication information of a second reference signal $\Omega$.

S402: The network device sends the indication information of the first dimension *L* and the indication information of the second reference signal $\Omega$ to a terminal device.

The indication information of the first dimension L directly, indirectly, explicitly, or implicitly indicates the first dimension L. The indication information of the second reference signal $\Omega$ directly, indirectly, explicitly, or implicitly indicates the second reference signal $\Omega$. For example, the indication information of the second reference signal $\Omega$ may indicate the second reference signal $\Omega$ by indicating a sequence-related parameter and/or a resource of the second reference signal $\Omega$.

S403: The terminal device sends the second reference signal $\Omega$ to the network device, and after the second reference signal $\Omega$ passes through an uplink channel, the network device obtains an uplink measurement result $Y_1$.

The uplink measurement result obtained by the network device is obtained after the second reference signal is superimposed on the uplink channel. For example, the uplink measurement result $Y_1 = H_k^{UL} \cdot \Omega \in \mathbb{C}^{NTX \times L}$ is a measurement result of the second reference signal $\Omega$, dimensions of $H_k^{UL}$ are $N_{TX} \times N_{RX}$, and dimensions of $\Omega$ are $N_{RX} \times L$.

S404: The network device performs QR decomposition on the uplink measurement result $Y_1$, to obtain a matrix Q.

The measurement result satisfies $Y_1 = Q \cdot R$, and the matrix $Q \in \mathbb{C}^{NTX \times NTX}$ is obtained.

S405: The network device truncates the matrix Q based on the first dimension L, to obtain a first reference signal $\overline{Q}$.

The first reference signal obtained after dimension reduction satisfies $\overline{Q} = Q(:,1: L) \in \mathbb{C}^{NTX \times L}$ .

S406: The network device sends a conjugate $\overline{Q}^*$ of the first reference signal $\overline{Q}$ to the terminal device, and after the conjugate $\overline{Q}^*$ passes through a downlink channel, the terminal device obtains a downlink measurement result $Y_2$.

The downlink measurement result obtained by the terminal device is obtained after the first reference signal is superimposed on the downlink channel. For example, the downlink measurement result satisfies $Y_2 = H_k^{DL} \cdot \overline{Q}^* \in \mathbb{C}^{NRX \times L}$ .

S407: The terminal device performs transpose and SVD decomposition on the downlink measurement result $Y_2$, to obtain a matrix U.

The downlink measurement result $Y_2$ is transposed, to obtain a transposed matrix $Y_2^T \in \mathbb{C}^{L \times NRX}$ . SVD decomposition is performed on $Y_2^T$ , where $Y_2^T = U \cdot \Sigma \cdot V^H$ .

S408: The terminal device truncates the matrix U based on a quantity $N_{RX}$ of receive antennas of the terminal device, to obtain channel information $\overline{U}$.

The channel information satisfies $\overline{U} = U(:,1: N_{RX}) \in \mathbb{C}^{L \times N_{RX}}$ .

S409: The terminal device sends the channel information $\overline{U}$ to the network device.

S410: The network device projects the channel information $\overline{U}$ into high-dimensional space, to obtain a projection result $V_k$, where

$$V_k = (\overline{Q} \cdot \overline{U})^* \in \mathbb{C}^{N_{TX} \times N_{RX}}.$$

S411: The network device extracts the first $Nlayer_k$ columns of the projection result $V_k$, to obtain a matrix $P_k$, where

$$P_k = V_k[:,1:NLayer_k] \in \mathbb{C}^{N_{TX} \times NLayer_k}.$$

S412: The network device combines $P_k$ of a plurality of users, to obtain a matrix $P_{opt}$, where

$$P_{opt} = [P_1, \ldots, P_k, \ldots, P_{Nue}] \in \mathbb{C}^{N_{TX} \times NLayer}.$$

S413: The network device calculates a precoding matrix $\widetilde{W}_{opt}^{zf}$ based on the matrix $P_{ope}$ and a zero forcing algorithm, where

$$\widetilde{W}_{opt}^{zf} = P_{opt} \cdot \left( P_{opt}^H \cdot P_{opt} \right)^{-1} \in \mathbb{C}^{N_{TX} \times NLayer}.$$

S414: The network device performs normalization processing on the precoding matrix $\widetilde{W}_{opt}^{zf}$, to obtain a matrix $W_{opt}^{zf}$, where

$$W_{opt}^{zf} = \frac{\widetilde{W}_{opt}^{zf}}{\sqrt{\sum_{i=1}^{Ntrunc} \left| \widetilde{W}_{opt}^{zf}[i,:] \right|^2}} \in \mathbb{C}^{N_{TX} \times NLayer}.$$

S415: The network device sends precoded user data based on the matrix $W_{opt}^{zf}$.

It can be learned that, in this embodiment, especially through full-dimensional channel matrix decomposition, a calculation amount of precoding of the terminal device can be effectively reduced. The terminal device side performs matrix decomposition of a small-dimensional matrix, and feeds back a small-dimensional singular value vector, so that a throughput of a communication system can be ensured.

It should be noted that the communication method provided in this embodiment of this application is applicable to a TDD mode. In addition, the communication method is applicable to a communication scenario in which the network device sends a CSI-RS to the terminal device to calculate a precoding matrix, and is also applicable to a communication scenario in which the terminal device sends an SRS to the network device to calculate a precoding matrix. The foregoing embodiments may be used separately, or may be used in combination.

The following analyzes calculation complexity in this embodiment of this application. In a precoding calculation process, a calculation amount is mainly consumed in a process of SVD decomposition. For a matrix whose dimensions are $m \times n$, an order of magnitude of calculation complexity of the SVD decomposition is $m^2 n$. If SVD decomposition is performed on $\widehat{H}_k^{DL}$ whose dimensions are $N_{RX} \times N_{TX}$, an order of magnitude of complexity is $N_{RX}^2 N_{TX}$. Assuming that channel estimation needs to be performed K times in total, total complexity is shown in the following Table 1, and is $KN_{RX}^2 N_{TX}$. However, in the communication method provided in this embodiment of this application, the terminal device needs to perform SVD decomposition only on $Y_2^T \in \mathbb{C}^{L \times N_{RX}}$, to obtain $Y_2^T = U \cdot \Sigma \cdot V^H$, and complexity is $L^2 N_{RX}$. Assuming that channel estimation needs to be performed $K$ times in total, total complexity is $KL^2 N_{RX}$. Generally, $N_{TX} \geq L \geq N_{RX}$, and a value of $N_{TX}$ is far greater than $L$. Therefore, the communication method provided in this embodiment of this application can significantly reduce precoding calculation complexity.

**Table 1**

| Dimensions of a matrix | $N_{RX} \times N_{TX}$ (K times) | $L \times N_{RX}$ (K times) |
|---|---|---|
| Calculation complexity | $KN_{RX}^2 N_{TX}$ | $KL^{2N}_{RX}$ |

The terms "system" and "network" in embodiments of this application may be used interchangeably. In descriptions of embodiments of this application, "and/or" describes an association relationship between associated objects and indicates that three relationships may exist. For example, A and/or B may indicate the following three cases: Only A exists, both A and B exist, and only B exists. The character "/" generally indicates an "or" relationship between the associated objects. In this application, "at least one" means one or more, and "a plurality of" means two or more. In addition, it should be understood that, in the description of this application, the terms "first", "second", and "third" are merely intended for distinguishing a purpose of description and shall not to be understood as indication or implication of relative importance, or indication or implication of order. Reference to "an embodiment", "some embodiments", or the like described in this specification indicates that one or more embodiments of this application include a specific feature, structure, or characteristic described with reference to embodiments. Therefore, statements such as "in one embodiment", "in some embodiments", "in some other embodiments", and "in still some other embodiments" that appear in this specification and differ from each other do not necessarily refer to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner. The method and the apparatus are based on a same technical concept or similar technical concepts. Because problem-resolving principles of the method and the apparatus are similar, mutual reference may be made to implementation of the apparatus and the method, and repeated parts are not described.

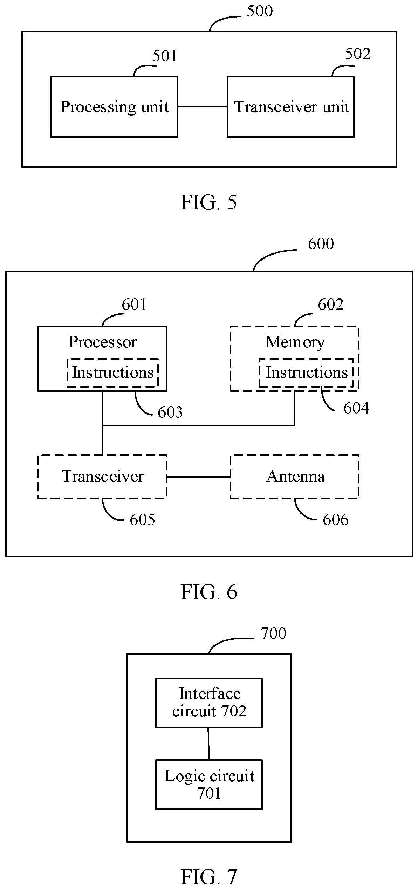

Based on a same technical concept as the foregoing communication method, an embodiment of this application further provides a communication apparatus. As shown in FIG. 5, a communication apparatus 500 includes a processing unit 501 and a transceiver unit 502. Optionally, a function implemented by the transceiver unit 502 may be completed by a communication interface, and the transceiver unit 502 may be integrated by a receiving unit and a sending unit. The communication apparatus 500 may be a terminal device or a network device, or may be located in the terminal device or the network device. The communication apparatus 500 may be configured to implement the methods described in the foregoing method embodiments. For example, the communication apparatus 500 can perform the steps performed by the terminal device or the network device in the methods in FIG. 3 and FIG. 4.

In a possible embodiment, the communication apparatus 500 is used in a terminal device.

For example, the transceiver unit 502 is configured to: receive first indication information from a network device, where the first indication information indicates a first dimension; and receive a downlink reference signal from the network device, where the downlink reference signal is determined based on the first dimension and an uplink reference signal.

The processing unit 501 is configured to determine channel information based on the downlink reference signal.

In an implementation, both a port number of the downlink reference signal and a port number of the uplink reference signal are equal to a value of the first dimension.

In an implementation, the transceiver unit 502 is further configured to send the uplink reference signal to the network device based on the first dimension.

In an implementation, the transceiver unit 502 is further configured to send the channel information to the network device.

In an implementation, the processing unit 501 is specifically configured to determine the channel information based on a measurement result of the downlink reference signal, where a dimension corresponding to the channel information is equal to a quantity of receive antennas of the terminal device.

In an implementation, the transceiver unit 502 is specifically configured to send a parameter set to the network device, where the parameter set indicates a codebook matrix corresponding to the channel information.

In another possible embodiment, the communication apparatus 500 is used in a network device.

For example, the transceiver unit 502 is configured to send first indication information to a terminal device, where the first indication information indicates a first dimension.

The processing unit 501 is configured to determine a downlink reference signal based on the first dimension and an uplink reference signal.

The transceiver unit 502 is configured to send the downlink reference signal to the terminal device.

In an implementation, both a port number of the downlink reference signal and a port number of the uplink reference signal are equal to a value of the first dimension.

In an implementation, the transceiver unit 502 is further configured to receive the uplink reference signal from the terminal device.

In an implementation, the transceiver unit 502 is further configured to receive channel information from the terminal device, where the channel information is determined based on the downlink reference signal.

In an implementation, the processing unit 501 is specifically configured to determine the downlink reference signal based on the first dimension and a measurement result of the uplink reference signal, where a dimension corresponding to the downlink reference signal is less than a quantity of transmit antennas of the network device, and/or greater than a quantity of receive antennas of the terminal device.

In an implementation, the transceiver unit 502 is specifically configured to receive a parameter set from the terminal device, where the parameter set indicates a codebook matrix corresponding to the channel information.

It should be noted that division into the modules in embodiments of this application is an example, and is merely logical function division. In actual implementation, there may be another division manner. In addition, function units in embodiments of this application may be integrated into one processing unit, or may exist alone physically, or two or more units may be integrated into one unit. The integrated unit may be implemented in a form of hardware, or may be implemented in a form of a software functional unit. For example, the transceiver unit may include a receiving unit and/or a sending unit.

When the integrated unit is implemented in the form of a software functional unit and sold or used as an independent product, the integrated unit may be stored in a computer-readable storage medium. Based on such an understanding, the integrated unit may be stored in a storage medium as a computer software product, and includes several instructions for instructing a computer device (which may be a personal computer, a server, or a network device) or a processor (processor) to perform all or some of the steps of the methods in embodiments of this application.

As shown in FIG. 6, an embodiment of this application further provides a diagram of a structure of a communication apparatus 600. The communication apparatus 600 may be configured to implement the methods described in the foregoing method embodiments. Refer to descriptions in the foregoing method embodiments. For example, the communication apparatus 600 can perform the steps performed by the terminal device or the network device in the methods in FIG. 3 and FIG. 4.

The communication apparatus 600 includes one or more processors 601. The processor 601 may be a general-purpose processor, a dedicated-processor, or the like. For example, the processor may be a baseband processor or a central processing unit. The baseband processor may be configured to process a communication protocol and communication data. The central processing unit may be configured to: control a communication apparatus (for example, a base station, a terminal, or a chip), execute a software program, and process data of the software program. The communication apparatus may include a transceiver unit, configured to input (receive) and output (send) a signal. For example, the transceiver unit may be a transceiver or a radio frequency chip.

The communication apparatus 600 includes one or more processors 601, and the one or more processors 601 can implement the methods in the foregoing embodiments. Optionally, the processor 601 may further implement another function in addition to the methods shown in the foregoing embodiments.

In a design, the processor 601 may execute instructions, so that the apparatus 600 performs the methods described in the foregoing method embodiments. All or some of the instructions may be stored in the processor 601. For example, all or some of instructions 603 may be stored in the processor 601, or the instructions 603 are stored in the processor 601, and instructions 604 are stored in a memory 602 coupled to the processor. The processor 601 may synchronously execute the instructions 603 and the instructions 604, so that the communication apparatus 600 performs the methods described in the foregoing method embodiments. The instructions 603 and the instructions 604 are also referred to as computer programs.

In still another possible design, the communication apparatus 600 may further include a circuit, and the circuit may implement functions in the foregoing method embodiments.

In still another possible design, the communication apparatus 600 may include one or more memories 602 storing the instructions 604. The instructions may be run on the processor 601, so that the apparatus 600 performs the methods described in the foregoing method embodiments. Optionally, the memory 602 may further store data. Optionally, the processor 601 may also store instructions and/or data. For example, the one or more memories 602 may store the correspondence described in the foregoing embodiment, or the related parameter, table, or the like in the foregoing embodiment. The processor and the memory may be separately disposed, or may be integrated with each other.

In still another possible design, the apparatus 600 may further include a transceiver 605 and an antenna 606. The processor 601 may be referred to as a processing unit, and controls the apparatus (a terminal or a base station). The transceiver 605 may be referred to as a transceiver, a transceiver circuit, a transceiver unit, or the like, and is configured to implement sending and receiving functions of the apparatus through the antenna 606.

The processor may be a general-purpose central processing unit (central processing unit, CPU), a microprocessor, an application-specific integrated circuit (application-specific integrated circuit, ASIC), one or more integrated circuits configured to control program execution of the solutions of this application, a general-purpose processor, a digital signal processor (digital signal processor, DSP), a programmable gate array (field programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. Steps of the methods disclosed with reference to embodiments of this application may be directly performed and completed by a hardware decoding processor, or may be performed and completed by using a combination of hardware in the decoding processor and a software module. The software module may be in a storage medium, and the storage medium is located in a memory.

The memory may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. Through illustrative but not limited description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (synchronous link DRAM, SLDRAM), or a direct rambus random access memory (Direct Rambus RAM, DR RAM). It should be noted that the memory of the systems and methods described in this specification includes but is not limited to these and any memory of another proper type. The memory may independently exist and may be connected to the processor through a communication line. The memory may alternatively be integrated with the processor.

An embodiment of this application further provides a communication system, including a terminal device and a network device. The terminal device and the network device may implement a communication method in any one of the foregoing method embodiments.

An embodiment of this application further provides a computer-readable medium. The computer-readable medium stores a computer program. When the computer program is executed by a computer, the communication method in any one of the foregoing method embodiments is implemented.

An embodiment of this application further provides a computer program product, including a computer program. When the computer program is executed by a computer, the communication method in any one of the foregoing method embodiments is implemented.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on a computer, the procedure or functions according to embodiments of this application are entirely or partially generated. The computer may be the foregoing communication apparatus. The computer instructions may be stored in a computer-readable storage medium, or may be transmitted from one computer-readable storage medium to another computer-readable storage medium. The computer-readable storage medium may be the foregoing storage medium or the foregoing memory.

In a possible design, when the communication apparatus is a chip, for example, a chip in a network device, or a chip in a terminal device, the processing unit or the processor 601 may be one or more logic circuits, and the sending unit, the receiving unit, or the transceiver 605 may be an input/output interface, or may be referred to as a communication interface, an interface circuit, an interface, or the like. Alternatively, the transceiver 605 may be a sending unit and a receiving unit. The sending unit may be an output interface, and the receiving unit may be an input interface. Alternatively, the sending unit and the receiving unit are integrated into one unit, for example, an input/output interface. As shown in FIG. 7, a communication apparatus 700 shown in FIG. 7 includes a logic circuit 701 and an interface circuit 702. To be specific, the processing unit or the processor 601 may be implemented by using the logic circuit 701, and the transceiver unit or the transceiver 605 may be implemented by using the interface circuit 702. The logic circuit 701 may be a chip, a processing circuit, an integrated circuit, a system on chip (system on chip, SoC), or the like. The interface circuit 702 may be a communication interface, an input/output interface, or the like. In embodiments of this application, the logic circuit may further be coupled to the interface circuit. A specific connection manner of the logic circuit and the interface circuit is not limited in embodiments of this application.

In some embodiments of this application, the logic circuit 701 and the interface circuit 702 may be configured to perform functions, operations, or the like performed by the network function or the control plane function. The interface circuit 702 may be configured to receive a signal from a communication apparatus other than the communication apparatus 700 and transmit the signal to the logic circuit 701, or send a signal from the logic circuit 701 to a communication apparatus other than the communication apparatus 700. The logic circuit 701 may be configured to implement any one of the foregoing method embodiments by executing code instructions.

For example, the interface circuit 702 is configured to receive first indication information from a network device. For functions or operations performed by the communication apparatus, refer to the foregoing method embodiments. Details are not described herein again.

A person of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, in other words, may be located in one position, or may be distributed on a plurality of network units. Some or all of the units may be selected according to actual requirements to achieve the objectives of the solutions of embodiments in this application.

In addition, function units in embodiments of this application may be integrated into one processing unit, each of the units may exist alone physically, or two or more units may be integrated into one unit. The integrated unit may be implemented in a form of hardware, or may be implemented in a form of a software functional unit.

With descriptions of the foregoing implementations, a person skilled in the art may clearly understand that this application may be implemented by hardware, firmware, or a combination thereof. When the present invention is implemented by software, the foregoing functions may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another. The storage medium may be any available medium accessible to a computer.

In conclusion, the foregoing descriptions are merely example embodiments of the technical solutions of this application, but are not intended to limit the protection scope of this application. Any modification, equivalent replacement, improvement, or the like made without departing from the principle of this application shall fall within the protection scope of this application.

**Claims**

1. A communication method, wherein the method comprises:

   receiving first indication information from a network device, wherein the first indication information indicates a first dimension;
   receiving a downlink reference signal from the network device, wherein the downlink reference signal is determined based on the first dimension and an uplink reference signal; and
   determining channel information based on the downlink reference signal.

2. The method according to claim 1, wherein both a port number of the downlink reference signal and a port number of the uplink reference signal are equal to a value of the first dimension.

3. The method according to claim 1 or 2, wherein before the receiving a downlink reference signal from the network device, the method further comprises:
   sending the uplink reference signal to the network device based on the first dimension.

4. The method according to any one of claims 1 to 3, wherein the method further comprises:
   sending the channel information to the network device.

5. The method according to any one of claims 1 to 4, wherein the determining channel information based on the downlink reference signal comprises:
determining the channel information based on a measurement result of the downlink reference signal, wherein a dimension corresponding to the channel information is equal to a quantity of receive antennas of a terminal device.

6. The method according to claim 4, wherein the sending the channel information to the network device comprises:
sending a parameter set to the network device, wherein the parameter set indicates a codebook matrix corresponding to the channel information.

7. A communication method, wherein the method comprises:

sending first indication information to a terminal device, wherein the first indication information indicates a first dimension;
determining a downlink reference signal based on the first dimension and an uplink reference signal; and
sending the downlink reference signal to the terminal device.

8. The method according to claim 7, wherein both a port number of the downlink reference signal and a port number of the uplink reference signal are equal to a value of the first dimension.

9. The method according to claim 7 or 8, wherein before the determining a downlink reference signal based on the first dimension and an uplink reference signal, the method further comprises:
receiving the uplink reference signal from the terminal device.

10. The method according to any one of claims 7 to 9, wherein the method further comprises:
receiving channel information from the terminal device, wherein the channel information is determined based on the downlink reference signal.

11. The method according to any one of claims 7 to 10, wherein the determining a downlink reference signal based on the first dimension and an uplink reference signal comprises:
determining the downlink reference signal based on the first dimension and a measurement result of the uplink reference signal, wherein a dimension corresponding to the downlink reference signal is less than a quantity of transmit antennas of a network device, and/or greater than a quantity of receive antennas of the terminal device.

12. The method according to claim 10, wherein the receiving the uplink reference signal from the terminal device comprises:
receiving a parameter set from the terminal device, wherein the parameter set indicates a codebook matrix corresponding to the channel information.

13. A communication apparatus, wherein the apparatus comprises:

a transceiver unit, configured to: receive first indication information from a network device, wherein the first indication information indicates a first dimension; and receive a downlink reference signal from the network device, wherein the downlink reference signal is determined based on the first dimension and an uplink reference signal; and
a processing unit, configured to determine channel information based on the downlink reference signal.

14. The apparatus according to claim 13, wherein both a port number of the downlink reference signal and a port number of the uplink reference signal are equal to a value of the first dimension.

15. The apparatus according to claim 13 or 14, wherein the transceiver unit is further configured to send the uplink reference signal to the network device based on the first dimension.

16. The apparatus according to any one of claims 13 to 15, wherein the transceiver unit is further configured to send the channel information to the network device.

17. The apparatus according to any one of claims 13 to 16, wherein the processing unit is specifically configured to determine the channel information based on a measurement result of the downlink reference signal, wherein a dimension corresponding to the channel information is equal to a quantity of receive antennas of a terminal device.

18. The apparatus according to claim 15, wherein the transceiver unit is specifically configured to send a parameter set to the network device, wherein the parameter set indicates a codebook matrix corresponding to the channel information.

19. The apparatus according to any one of claims 13 to 18, wherein the transceiver unit is a transceiver, and the processing unit is a processor.

20. A communication apparatus, wherein the apparatus comprises:

   a transceiver unit, configured to send first indication information to a terminal device, wherein the first indication information indicates a first dimension; and
   a processing unit, configured to determine a downlink reference signal based on the first dimension and an uplink reference signal, wherein
   the transceiver unit is further configured to send the downlink reference signal to the terminal device.

21. The apparatus according to claim 20, wherein both a port number of the downlink reference signal and a port number of the uplink reference signal are equal to a value of the first dimension.

22. The apparatus according to claim 20 or 21, wherein the transceiver unit is further configured to receive the uplink reference signal from the terminal device.

23. The apparatus according to any one of claims 20 to 22, wherein the transceiver unit is further configured to receive channel information from the terminal device, wherein the channel information is determined based on the downlink reference signal.

24. The apparatus according to any one of claims 20 to 23, wherein the processing unit is specifically configured to determine the downlink reference signal based on the first dimension and a measurement result of the uplink reference signal, wherein a dimension corresponding to the downlink reference signal is less than a quantity of transmit antennas of a network device, and/or greater than a quantity of receive antennas of the terminal device.

25. The apparatus according to claim 21, wherein the transceiver unit is specifically configured to receive a parameter set from the terminal device, wherein the parameter set indicates a codebook matrix corresponding to the channel information.

26. The apparatus according to any one of claims 20 to 25, wherein the transceiver unit is a transceiver, and the processing unit is a processor.

27. A communication apparatus, comprising a processor, wherein the processor is coupled to a memory; and
   the processor is configured to execute a computer program or instructions stored in the memory, to enable the apparatus to perform the method according to any one of claims 1 to 12.

28. A communication apparatus, comprising a logic circuit and an interface circuit, wherein the interface circuit is configured to receive a signal from another communication apparatus other than the communication apparatus and transmit the signal to the logic circuit, or send a signal from the logic circuit to another communication apparatus other than the communication apparatus, and the logic circuit is configured to implement the method according to any one of claims 1 to 12 by executing code instructions.

29. A computer-readable storage medium, comprising a computer program or instructions, wherein when the computer program or the instructions are run on a computer, the method according to any one of claims 1 to 12 is performed.

30. A computer program product, comprising a computer program or instructions, wherein when the computer program or the instructions are run on a computer, the method according to any one of claims 1 to 12 is performed.

31. A communication system, comprising the communication apparatus according to any one of claims 13 to 19 and the communication apparatus according to any one of claims 20 to 26.

32. A communication system, comprising a terminal device configured to perform the method according to any one of claims 1 to 6 and a network device configured to perform the method according to any one of claims 7 to 12.

**33.** A chip system, wherein the chip system comprises:

a processor and an interface, wherein the processor is configured to execute a program or instructions, to implement the method according to any one of claims 1 to 12.

FIG. 1

(a)                    (b)                    (c)

FIG. 2

Terminal
device

Network
device

S301: First indication
information, indicating or for
configuring a first dimension

S302: Downlink reference signal, where the
downlink reference signal is determined based on
the first dimension and an uplink reference signal

S303: Determine channel
information based on the
downlink reference signal

FIG. 3

Network device                                                      Terminal device

S401: The network device determines indication information of a first dimension $L$ and indication information of a second reference signal $\Omega$

S402: Indication information of the first dimension $L$ and indication information of the second reference signal $\Omega$

S403: The terminal device sends the second reference signal $\Omega$, and the network device obtains an uplink measurement result $Y_1$

S404: The network device performs QR decomposition on the uplink measurement result $Y_1$, to obtain a matrix $Q$

S405: The network device truncates the matrix $Q$ based on the first dimension $L$, to obtain a first reference signal $\bar{Q}$

S406: The network device sends a conjugate $\bar{Q}^*$ of the first reference signal $\bar{Q}$, and the terminal device obtains a downlink measurement result $Y_2$

S407: The terminal device performs transpose and SVD decomposition on the downlink measurement result $Y_2$, to obtain a matrix $U$

S408: The terminal device truncates the matrix $U$ based on a quantity $N_{RX}$ of receive antennas of the terminal device, to obtain channel information $\bar{U}$

S409: Channel information $\bar{U}$

S410: The network device projects the channel information $\bar{U}$ into high-dimensional space, to obtain a projection result $V_k$

S411: The network device extracts the first $Nlayer_k$ columns of the projection result $V_k$, to obtain a matrix $P_k$

S412: The network device combines $P_k$ of a plurality of users, to obtain a matrix $P_{opt}$

S413: The network device calculates a precoding matrix $\widetilde{W}_{opt}^{zf}$ based on the matrix $P_{opt}$ and a zero forcing algorithm

S414: The network device performs normalization processing on the precoding matrix $\widetilde{W}_{opt}^{zf}$, to obtain a matrix $W_{opt}^{zf}$

S415: Send precoded user data based on the matrix $W_{opt}^{zf}$

FIG. 4

500

501                                502

| Processing unit | | Transceiver unit |

FIG. 5

600

601                                602

| Processor | | Memory |
| Instructions | | Instructions |

603                                604

| Transceiver | | Antenna |

605                                606

FIG. 6

700

Interface
circuit 702

Logic circuit
701

FIG. 7

<table>
<tr><td colspan="2" align="center">**INTERNATIONAL SEARCH REPORT**</td><td>International application No.<br><br>**PCT/CN2023/096855**</td></tr>
</table>

| A. | CLASSIFICATION OF SUBJECT MATTER |
|---|---|

H04B 7/0413(2017.01)i

According to International Patent Classification (IPC) or to both national classification and IPC

| B. | FIELDS SEARCHED |
|---|---|

Minimum documentation searched (classification system followed by classification symbols)

IPC: H04B,H04W,H04L

Documentation searched other than minimum documentation to the extent that such documents are included in the fields searched

Electronic data base consulted during the international search (name of data base and, where practicable, search terms used)

CNTXT, ENTXTC, DWPI, 3GPP, CNKI: 参考信号, 维度, 端口, 端口数, 列数, 矩阵, 天线数, 行数, 数量, 指示, antenna, dimensionality, port, reference, signal, row, column

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 109150387 A (HUAWEI TECHNOLOGIES CO., LTD.) 04 January 2019 (2019-01-04) description, paragraphs 102-292 and 431-445 | 1, 3-7, 9-13, 15-20, 22-33 |
| A | CN 109586819 A (CHINA ACADEMY OF TELECOMMUNICATIONS TECHNOLOGY) 05 April 2019 (2019-04-05) entire document | 1-33 |
| A | CN 109428641 A (HUAWEI TECHNOLOGIES CO., LTD.) 05 March 2019 (2019-03-05) entire document | 1-33 |
| A | US 2020351053 A1 (TELEFONAKTIEBOLAGET LM ERICSSON (PUBL)) 05 November 2020 (2020-11-05) entire document | 1-33 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 September 2023** | **05 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/096855**

| Patent document cited in search report | | | Publication date (day/month/year) | Patent family member(s) | | | Publication date (day/month/year) |
|---|---|---|---|---|---|---|---|
| CN | 109150387 | A | 04 January 2019 | JP | 2020523894 | A | 06 August 2020 |
| | | | | JP | 7246327 | B2 | 27 March 2023 |
| | | | | EP | 3627732 | A1 | 25 March 2020 |
| | | | | EP | 3627732 | A4 | 13 May 2020 |
| | | | | US | 2020119881 | A1 | 16 April 2020 |
| | | | | US | 11239970 | B2 | 01 February 2022 |
| | | | | BR | 112019026840 | A2 | 30 June 2020 |
| | | | | WO | 2018228522 | A1 | 20 December 2018 |
| | | | | IN | 201937053748 | A | 20 December 2018 |
| | | | | CN | 109150387 | B | 20 December 2018 |
| CN | 109586819 | A | 05 April 2019 | TW | 201916623 | A | 16 April 2019 |
| | | | | TWI | 734936 | B | 01 August 2021 |
| | | | | EP | 3691160 | A1 | 05 August 2020 |
| | | | | EP | 3691160 | A4 | 11 November 2020 |
| | | | | KR | 20200054256 | A | 19 May 2020 |
| | | | | KR | 102319042 | B1 | 29 October 2021 |
| | | | | JP | 2020535751 | A | 03 December 2020 |
| | | | | JP | 7284158 | B2 | 30 May 2023 |
| | | | | WO | 2019062617 | A1 | 04 April 2019 |
| | | | | US | 2020266865 | A1 | 20 August 2020 |
| | | | | US | 11722192 | B2 | 08 August 2023 |
| | | | | CN | 114696928 | A | 01 July 2022 |
| CN | 109428641 | A | 05 March 2019 | EP | 3667958 | A1 | 17 June 2020 |
| | | | | EP | 3667958 | A4 | 26 August 2020 |
| | | | | EP | 3667958 | B1 | 19 April 2023 |
| | | | | WO | 2019042177 | A1 | 07 March 2019 |
| | | | | US | 2020204233 | A1 | 25 June 2020 |
| | | | | US | 11165480 | B2 | 02 November 2021 |
| | | | | CN | 109428641 | B | 15 October 2021 |
| US | 2020351053 | A1 | 05 November 2020 | EP | 3769483 | A1 | 27 January 2021 |
| | | | | WO | 2019182486 | A1 | 26 September 2019 |

Form PCT/ISA/210 (patent family annex) (July 2022)

# EP 4 521 651 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210616331